Europäisches Patentamt

European Patent Office

Office européen des brevets

(11) Veröffentlichungsnummer: **0 094 619**

**A1**

(12) # EUROPÄISCHE PATENTANMELDUNG

(21) Anmeldenummer: **83104661.0**

(22) Anmeldetag: **11.05.83**

(51) Int. Cl.³: **G 02 C 5/12**

(30) Priorität: **14.05.82 DE 3218191**

(43) Veröffentlichungstag der Anmeldung:
**23.11.83 Patentblatt 83/47**

(84) Benannte Vertragsstaaten:
**AT BE CH FR GB IT LI LU NL SE**

(71) Anmelder: **Röhm-Optik GmbH**
**Maybachstrasse 5-7**
**D-7250 Leonberg(DE)**

(72) Erfinder: **Gutbrod, Heinz**
**Dobelstrasse 21**
**D-7250 Leonberg 5(DE)**

(74) Vertreter: **Becker, Maria, Dipl.-Phys.**
**Auf dem Haigst 29**
**D-7000 Stuttgart 70(DE)**

(54) **Brillengestell.**

(57) Die Erfindung bezieht sich auf ein Brillengestell, bei dem zumindest teilweise die Fassungen für die Brillengläser aus Kunststoff bestehen. Bei derartigen Kunststoffrändern war es bisher nicht möglich, die Nasenauflageplättchen schwenkbeweglich anzuordnen, wodurch die Brillenauflage individuell der Nase des Brillenträgers anpassbar ist. Durch die Erfindung sollen nunmehr auch bei derartigen Brillengestellen, die im Bereich der Nasenauflage aus Kunststoff bestehen, die Nasenauflageplättchen schwenkbeweglich gehalten werden. Dieses wird dadurch erreicht, dass der Halteteil für die Nasenauflageplättchen vorzugsweise einstückig an den Einfassrändern angeformt bzw. in den Einfassrändern verankert ist.

Fig. 3

EP 0 094 619 A1

*Dipl.-Phys. M. Becker*
*Patentanwältin*

- / -

7000 Stuttgart 70
0094619
Telefon (0711) 600306

25.April 1983
A 6469 - v-str

Röhm - Optik GmbH
Maybachstrasse 5 - 7
D-7250 Leonberg

Brillengestell

Die Erfindung betrifft ein Brillengestell, bei dem zumindest ein Teil der Fassungen für die Brillengläser aus Kunststoff besteht, mit an den Fassungen einander gegenüberliegend angeordneten Nasenauflageplättchen aus Kunststoff.

Es sind sowohl Brillengestelle aus Metall als auch aus Kunststoff bekannt. Die Brillengestelle aus Metall weisen an der Nasenauflageseite jeweils einen Stegarm aus Metall auf, an welchem Nasenauflageplättchen aus Kunststoff beweglich angeordnet sind. Hierdurch ist es möglich, dass die Brille mit den Auflageplättchen sich individuell an der Nase anlegen kann.

Die bisher bekannten Brillengestelle aus Kunststoff weisen keine schwenkbeweglichen Nasenauflageplättchen auf. Sie haben lediglich eine Randverdickung im an der Nase aufliegenden Bereich. Es war bisher nicht möglich, Kunststoffgestelle mit schwenkbeweglichen Nasenauflageplättchen auszurüsten.

Der Erfindung liegt die Aufgabe zugrunde, eine bewegliche Halterung der Nasenauflageplättchen am Brillengestell zu schaffen, die vorzugsweise ohne Metallteile auskommt und eine einfache Montage und zuverlässige Verbindung der Nasenauflageplättchen an dem Brillengestell ermöglicht. Dabei soll die Halterung gleichzeitig verschleissfrei und auch hautsympathisch sein.

Diese Aufgabe wird gemäss der Erfindung bei einem Brillengestell aus Kunststoff dadurch gelöst, dass die Nasenauflageplättchen an jeweils einem vorzugsweise aus Kunststoff bestehenden und an den Einfassrändern angeordneten Halteteil schwenkbeweglich gehalten sind. Vorzugsweise ist vorgesehen, dass der Halteteil jeweils einstückig an den Einfassrändern angeformt ist. Statt dessen kann vorgesehen sein, dass der Halteteil zumindest teilweise aus Metall besteht und im aus Kunststoff bestehenden Brilleneinfassrand verankert bzw. angeformt ist.

Der Kunststoff für das Brillengestell soll dabei möglichst aus Polyamid bestehen, wodurch eine stabile und sichere Halterung gewährleistet ist.

Eine einfache Herstellung des Brillengestells nach der Erfindung ist dadurch möglich, dass die Halteteile Stegarme bilden und die Nasenauflageplättchen mittels einer Rastverbindung am freien Armende gehalten sind. Dadurch ist es möglich, die Nasenauflageplättchen in die angeformten Halteteile durch eine Schnappverbindung in Eingriff zu bringen.

Gemäss einem bevorzugten Ausführungsbeispiel ist der eine Teil der Rastverbindung in Art einer Lagerpfanne und der andere Teil in Art eines in diese formschlüssig eingreifenden noppenartigen Vorsprunges ausgebildet.

Es kann ferner vorteilhaft sein, dass der noppenartige Vorsprung an der Rückseite des Nasenauflageplättchens und innerhalb eines Durchganges angeordnet ist, der durch die Rückseite des Nasenauflageplättchens in Verbindung mit einem an dieses angeformten U-förmigen Bügel gebildet ist, wobei der die Bügelschenkel miteinander verbindende Verbindungssteg des Bügels den noppenartigen Vorsprung mit der Lagerpfanne des Stegarmes spielfrei im Eingriff hält.

Weitere Einzelheiten und Vorteile der Erfindung ergeben sich aus der nachfolgenden Beschreibung im Zusammenhang mit der anliegenden Zeichnung, in welcher ein Ausführungsbeispiel des Gegenstandes der Erfindung dargestellt ist. Hierin zeigen:

Figur 1 eine schaubildliche Ansicht der mit zwei Nasenauflageplättchen ausgestatteten Brille,

Figur 2 eine Ansicht auf eines der Nasenauflageplättchen in Richtung des Pfeiles A der Figur 1 gesehen, in vergrössertem Maßstab,

Figur 3 eine Ansicht des Nasenauflageplättchens gemäss Figur 2 in Richtung des Pfeiles B gesehen,

Figur 4 einen Schnitt entlang der Linie 4-4 der Figur 3.

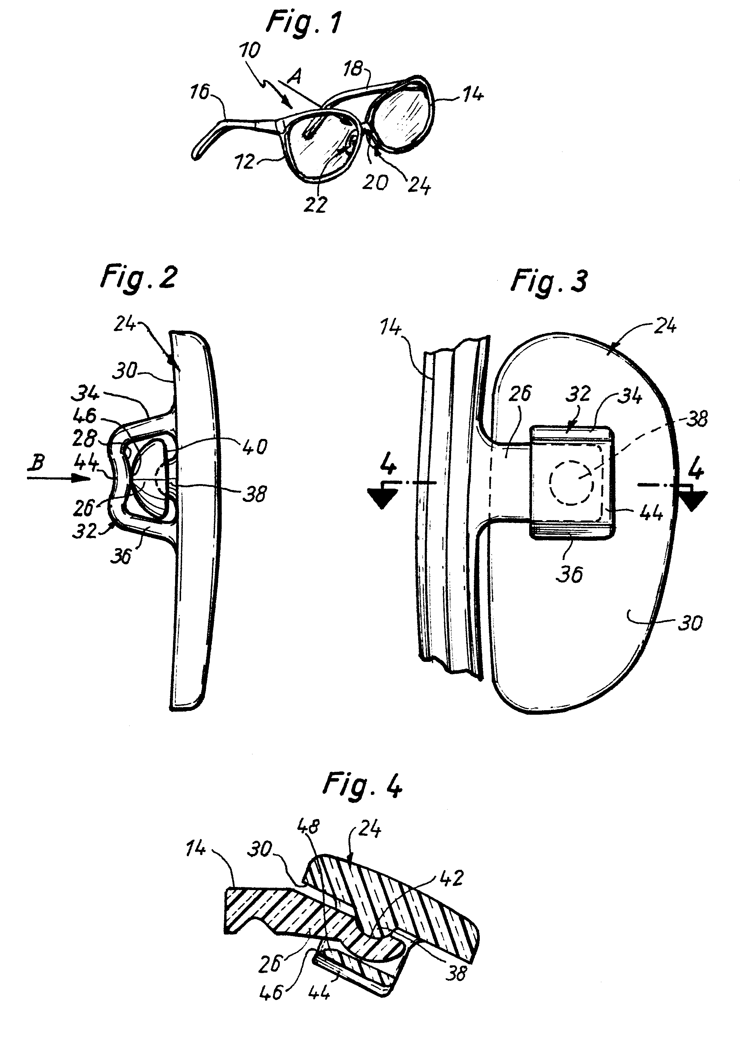

Die in Figur 1 gezeigte Brille besitzt ein aus Kunststoff, vorzugsweise aus Polyamid, geformtes Brillengestell 10, an dessen Einfassrändern 12, 14 in bekannter Weise jeweils ein Brillenbügel 16 bzw. 18 angelenkt ist. Beide Einfassränder sind über einen Nasensteg 20 starr miteinander verbunden. An der Rückseite der Einfassränder, unterhalb des Nasensteges 20, ist an zwei sich gegenüberliegenden Seiten in bekannter Weise jeweils ein Nasenauflageplättchen 22 bzw. 24 angeordnet, welches am Vorderende eines an der Rückseite der Einfassränder angeordneten Halteteils 26 schwenkbeweglich gehalten ist.

Die Halteteile 26 bilden an den Einfassrändern einstückig angeformte Stegarme, die mit ihrem freien Ende in einen Durchgang 28 mit seitlichem Spiel eingreifen. Dieser ist an der Rückseite 30 der Nasenauflageplättchen vorgesehen und vorzugsweise durch einen U-förmigen Bügel 32 gebildet, dessen Bügelschenkel 34, 36 an die Rückseite 30 der Nasenauflageplättchen angeformt ist. Diese bilden zusammen mit dem Bügel 32 ein Formteil aus Kunststoff, wobei sie vorzugsweise aus dem gleichen Material wie das Brillengestell bestehen. Der Bügel 32 kann auch aus Metalldraht gebildet sein.

Zur schwenkbeweglichen Verbindung von Nasenauflageplättchen und Stegarmen ist an der Rückseite 30 der Nasenauflageplättchen innerhalb des Bügels 32 jeweils ein noppenartiger Vorsprung 38 angeformt, dem an der benachbarten Seite 40 des in den Bügel 32 hineinragenden Endteiles des Stegarmes 26 eine Lagerpfanne 42 zugeordnet ist, in welcher der noppenartige Vorsprung formschlüssig eingreift. An seiner der Lagerpfanne 42 gegenüberliegenden Aussenseite ist der Stegarm 26 kalottenförmig gestaltet und hat mit dem die beiden Bügelschenkel 34, 36 miteinander verbindenden Verbindungssteg 44 Berührung. Dieser ist, wie Figur 2 deutlich zeigt, nach innen gewölbt, wodurch ein elastisch nachgiebiges Zusammenwirken zwischen Kalotte und Verbindungssteg bewirkt wird, wobei der Verbindungssteg ständig versucht, Lagerpfanne und noppenartigen Vorsprung in gegenseitigem Eingriff zu erhalten. Zu diesem Zweck ist der Abstand des Verbindungssteges 44 von der Kuppe des noppenartigen Vorsprungs 38 kleiner als der Radialabstand der der Lagerpfanne 42 gegenüberliegenden Aussenseite bzw. Kalottenfläche des Stegarmes 26 zur tiefsten Stelle der Lagerpfanne. Dadurch bilden Bügel 32, Stegarme 26 und noppenartiger Vorsprung 38 eine Rastverbindung, die eine gegenseitige schwenk- und kippfähige Bewegung der Nasenauflageplättchen relativ zu den Stegarmen und zudem eine jederzeit lösbare Verbindung ermöglichen.

Das gegenseitige Verrasten von Stegarmen und Nasenauflageplättchen wird hierbei dadurch begünstigt, dass der Verbindungssteg 44 des Bügels 32 an der Innenkante 46 seiner dem Einfassrand 12 bzw. 14 zugekehrten Stirnseite abgeschrägt bzw. abgerundet ist, wie dies in Figur 4 bei 48 gezeigt ist.

Die beschriebene Brille hat den grossen Vorteil, dass es nunmehr auch bei Kunststoffgestellen möglich ist, diese mit schwenkbeweglichen Nasenauflageplättchen auszustatten, wodurch eine angenehme und individuell angepasste Nasenauflage der Brille möglich ist.

Obschon vorzugsweise der Halteteil für das Nasenauflageplättchen in einem einzigen Spritzvorgang an den zumindest teilweise aus Kunststoff bestehenden Brilleneinfassrand einstückig angeformt ist, kann es im Rahmen der Erfindung auch als zweckmässig angesehen werden, den Halteteil aus einem Metalldraht vorzusehen, der gegebenenfalls mit Kunststoff ummantelt ist und im Einfassrand verankert oder an diesen angeformt ist.

*Dipl.-Phys. M. Becker*
*Patentanwältin*

7000 Stuttgart 70
0094619
Telefon (0711) 600306

25.April 1983
A 6469 - v-str

Röhm - Optik GmbH
Maybachstrasse 5 - 7
D-7250 Leonberg


Brillengestell


Patentansprüche:


1. Brillengestell, bei dem zumindest ein Teil der Fassungen für die Brillengläser aus Kunststoff besteht, mit an den Fassungen einander gegenüberliegend angeordneten Nasenauflageplättchen aus Kunststoff, dadurch gekennzeichnet, dass die Nasenauflageplättchen (22, 24) an jeweils einem vorzugsweise aus Kunststoff bestehenden und an den Einfassrändern (12, 14) angeordneten Halteteil (26) schwenkbeweglich gehalten sind.


2. Brillengestell nach Anspruch 1, dadurch gekennzeichnet, dass der Halteteil (26) jeweils einstückig an den Einfassrändern angeformt ist.


3. Brillengestell nach Anspruch 1 oder 2, dadurch gekennzeichnet, dass die Halteteile (26) Stegarme bilden und die Nasenauflageplättchen (22, 24) mittels einer Rastverbindung (38, 42) am freien Armende gehalten sind.

4. Brillengestell nach Anspruch 3, dadurch gekennzeichnet, dass der eine Teil der Rastverbindung in Art einer Lagerpfanne (42) und der andere Teil in Art eines in diese formschlüssig eingreifenden noppenartigen Vorsprunges (38) ausgebildet ist.

5. Brillengestell nach Anspruch 4, dadurch gekennzeichnet, dass der noppenartige Vorsprung (38) an der Rückseite des Nasenauflageplättchens (22, 24) und innerhalb eines Durchganges (28) angeordnet ist, der durch die Rückseite (30) des Nasenauflageplättchens (22 bzw. 24) in Verbindung mit einem an dieses angeformten U-förmigen Bügel (32) gebildet ist, wobei der die Bügelschenkel (34, 36) miteinander verbindende Verbindungssteg (44) des Bügels den noppenartigen Vorsprung (38) mit der Lagerpfanne (42) des Stegarmes (26) spielfrei im Eingriff hält.

6. Brillengestell nach Anspruch 5, dadurch gekennzeichnet, dass der Abstand des Verbindungssteges (44) des Bügels (32) von der Kuppe des noppenartigen Vorsprungs (38) kleiner ist als der Radialabstand der der Lagerpfanne (42) gegenüberliegenden Aussenseite des Stegarmes (26) zu deren tiefsten Stellen.

7. Brillengestell nach einem der vorhergehenden Ansprüche 4 bis 6, dadurch gekennzeichnet, dass die Stegarme (26) an ihrer von der Lagerpfanne (42) abgekehrten Seite konzentrisch zur Lagerpfanne kalottenförmig ausgebildet sind.

8. Brillengestell nach einem der vorhergehenden Ansprüche 5 bis 7, dadurch gekennzeichnet, dass der Verbindungssteg (44) des U-förmigen Bügels (32) an der Innenkante (46) seiner dem Einfassrand (12 bzw. 14) zugekehrten Stirnseite abgeschrägt, insbesondere abgerundet ist (bei 48).

**0094619**

9. Brillengestell nach einem der vorhergehenden Ansprüche 5 bis 8, dadurch gekennzeichnet, dass der Verbindungssteg (44) des U-förmigen Bügels (32) in Richtung des noppenartigen Vorsprunges (38) konvex gewölbt ist.

10. Brillengestell nach einem der vorhergehenden Ansprüche 5 bis 9, dadurch gekennzeichnet, dass die lichte Weite des U-förmigen Bügels (32) grösser ist als die Breite des die Lagerpfanne (42) enthaltenden Stegarmteiles.

11. Brillengestell nach einem der vorhergehenden Ansprüche, dadurch gekennzeichnet, dass es aus Polyamid besteht.

12. Brillengestell nach Anspruch 5, 6, 8, 9 oder 10, dadurch gekennzeichnet, dass der U-förmige Bügel (32) aus Kunststoff oder aus gegebenenfalls mit Kunststoff zumindest teilweise ummanteltem Metalldraht besteht.

13. Brillengestell nach Anspruch 1, dadurch gekennzeichnet, dass der Halteteil (26) zumindest teilweise aus Metall besteht und im aus Kunststoff bestehenden Brilleneinfassrand (12, 14) verankert bzw. angeformt, z.B. angespritzt, ist.

Fig. 1

Fig. 2

Fig. 3

Fig. 4

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-U-7 428 158 (OPTURA)<br><br>* Seiten 3,4; Ansprüche 1,3,4,10; Figuren 1-7 * | 1-3,10,12,13 | G 02 C 5/12 |
| A | GB-A- 320 668 (A.J. HARRISON)<br>* Insgesamt * | 2-7,13 | |
| | | | **RECHERCHIERTE SACHGEBIETE (Int. Cl. 3)**<br><br>G 02 C |

Der vorliegende Recherchenbericht wurde für alle Patentansprüche erstellt.

| Recherchenort<br>DEN HAAG | Abschlußdatum der Recherche<br>22-08-1983 | Prüfer<br>SEIFERT H.U. |
|---|---|---|